# EUROPEAN PATENT APPLICATION

(11) **EP 0 765 774 A1**
(43) Date of publication of application: **02.04.1997**
(21) Application number: 96202373.5
(22) Date of filing: 26.08.1996
(51) Int. Cl.: B60K 35/00

(54) **Instrument display**

(30) Priority: 28.09.1995 GB 9519755
(71) Applicant: DELCO ELECTRONICS OVERSEAS CORPORATION, Detroit, Michigan 48202 (US)
(72) Inventor: Dickson, David, Maghull, Liverpool L31 7DL (GB)
(74) Representative: Denton, Michael John

(57) **Abstract**

An instrument display (10) comprising a printed circuit board (18) having a front face (20); a stepper motor (24) of a gauge mounted on the front face of the printed circuit board and having a spindle (38) extending away from the front face; one or more light bulbs (44) mounted on the front face of the printed circuit board; a substantially planar light guide (28) lying substantially parallel with, and spaced from, the printed circuit board, the light guide having a rear face (30) directed towards the front face of the printed circuit board and a front face (32) directed away the front face of the printed circuit board, the light guide diffusing light from the or each light bulb by way of its rear face; a coverlay (34) secured to the front face of the light guide having gauge graphics and a substantially transparent display area formed thereon, the light guide and the coverlay having aligned apertures (40) through which the spindle of the stepper motor extends; and a pointer (42) of opaque material mounted on the spindle adjacent the coverlay. Allows illumination of the display area.

## Description

This invention relates to an instrument display for the dashboard of a motor vehicle.

An instrument display or cluster in a motor vehicle usually comprises a number of gauges (such as a speedometer, a tachometer, fuel gauge, etc.) positioned alongside one another and an odometer, and occasionally one or more warning lights. The display typically has a front face defined by a light guide with a coverlay secured thereto. The coverlay has the graphics for the gauges printed thereon. Mounted behind the light guide are the gauge drivers, control circuitry, the odometer mechanism, and light bulbs for illuminating the display. The gauges are typically mechanically driven and/or driven by air core mechanisms each of which have relatively large housings which are secured to the rear face of the light guide. Some of the electrical components of the associated control circuitry are positioned adjacent the light guide. This arrangement generates shadows across the light guide. As a consequence, special manufacturing techniques are used for the light guide and the coverlay in order to substantially reduce the presence of shadows on the illuminated display. This includes specially designed mouldings for the light guide, and special printing processes for the coverlay. The main display area of each gauge display is made opaque, with only the gauge graphics being capable of illumination. As a consequence, it is also necessary to provide pointers for each gauge which are also illuminated by the light bulbs. This requires even more complexity in the moulded light guide, and special moulding techniques for the pointers.

It is an object of the present invention to reduce the complexity of previously known arrangements.

An instrument display in accordance with the present invention comprises a printed circuit board having a front face; a stepper motor of a gauge mounted on the front face of the printed circuit board and having a spindle extending away from the front face; one or more light bulbs mounted on the front face of the printed circuit board; a substantially planar light guide lying substantially parallel with, and spaced from, the printed circuit board, the light guide having a rear face directed towards the front face of the printed circuit board and a front face directed away the front face of the printed circuit board, the light guide diffusing light from the or each light bulb by way of its rear face; a coverlay secured to the front face of the light guide having gauge graphics and a substantially transparent display area formed thereon, the light guide and the coverlay having aligned apertures through which the spindle of the stepper motor extends; and a pointer of opaque material mounted on the spindle adjacent the coverlay.

For the sake of clarity, by 'display area' is meant the area of the coverlay which is visible, excluding the gauge graphics.

With the arrangement of the present invention, the gauge driver is in the form of a stepper motor which is considerably smaller and lighter than the drive mechanisms of previously known air core gauges or mechanically driven gauges, and most, if not all, of the control circuitry for the stepper motor can be mounted on the rear face of the printed circuit board. This arrangement substantially eliminates the production of shadows. The problem of shadow formation can be further reduced by making the front face of the printed circuit board and the stepper motor of a light colour.

Having reduced the generation of shadows, the light guide can be formed from moulded plastics material or cut from a sheet of plastics material, substantially reducing the cost of the light guide. Also, there is no need for special printing techniques for the coverlay as there is no need to disguise or hide shadows. The coverlay can be formed with simple printing techniques, and the transparent display area can have any required colour. As the display area is capable of being illuminated, the pointers are formed from opaque material, thereby reducing the complexity and cost of manufacture of the pointers compared to previously known arrangements.

In the present invention, where an odometer is required in the instrument display, the odometer is preferably in the form of a liquid crystal display and is preferably secured to the printed circuit board with its display visible through the coverlay. Alternatively, the odometer may be mechanically driven.

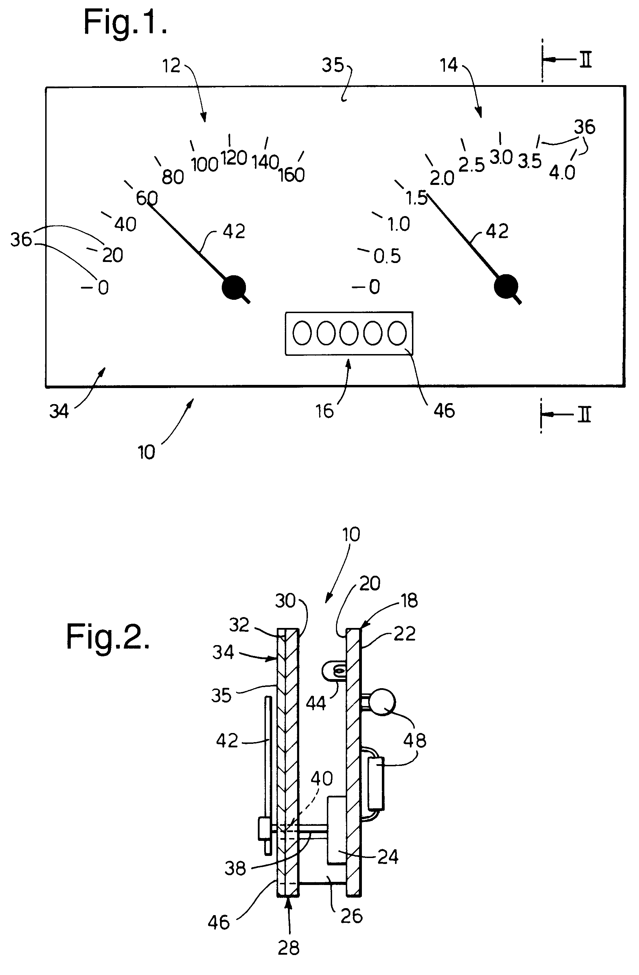

The present invention will now be described, by way of example, with reference to the accompanying drawings, in which:-
Figure 1 is a front view of an instrument display in accordance with the present invention; and
Figure 2 is a cross-sectional view on the line II-II of Figure 1.

Referring to the drawings, the instrument display 10 is for a dashboard (not shown) of a motor vehicle. The instrument display 10 is for a display having a speedometer 12, a tachometer 14, and an odometer 16, and comprises a printed circuit board 18 having a front face 20 and a rear face 22; a stepper motor 24 for driving the tachometer 14; a stepper motor (not shown) for driving the speedometer 12; and a liquid crystal display 26 for the odometer 16. The stepper motors 24 are substantially the same and are mounted on the front face 20 of the printed circuit board 18.

The instrument display 10 further comprises a light guide 28 which is substantially planar and substantially parallel to the printed circuit board 18. The light guide 28 has a rear face 30 directed towards the front face 20 of the printed circuit board 18 and a front face 32 directed away from the front face of the printed circuit board. A coverlay 34 is secured on the front face 32 of the light guide 28. The coverlay 34 is formed such that substantially the whole of the visible display area 35 (which can be any required colour) is transparent with the graphics 36 for each gauge 12,14 printed thereon. Each stepper motor 24 has a spindle 38 which extends through aligned apertures 40 in the light guide 28 and the coverlay 34. A pointer 42 is mounted on the end of each spindle 38. The pointer 42 is formed from opaque material, preferably moulded plastics material.

The light guide 28 is preferably moulded from plastics material or cut from a sheet of plastics material, such as clear or white perspex. The light guide 28 diffuses light from one or more light bulbs 44 mounted on the front face 20 of the printed circuit board 18. When the or each light bulb 44 is illuminated, the light guide 28 diffuses the light such that the display area 35 of the instrument display 10 is illuminated.

A suitable window 46 is formed in the coverlay 34 and the light guide 28 so that the display from the odometer 16 is visible. A black border may be formed on the coverlay 34 around the window 46 to enhance the odometer display. At least the larger (in terms of size), and preferably most of, the electrical components 48 for controlling the operation of the stepper motors 24, the liquid crystal display 26, and the or each light bulb 44, are mounted on the rear face 22 of the printed circuit board 18. The front face 20 of the printed circuit board 18, the stepper motors 24, and any components (not shown) mounted on the front face of the printed circuit board are preferably light in colour to reduce the risk of formation of shadows.

Other gauges, such as a fuel gauge, engine temperature gauge, etc., and/or warning lights, may be included in the instrument display 10 as required. However, in each case, the required stepper motor for driving the gauge and/or the bulbs or light emitting diodes for the warning lights, are mounted on the front face 20 of the printed circuit board 18.

## Claims

1. An instrument display (10) comprising a printed circuit board (18) having a front face (20); a stepper motor (24) of a gauge mounted on the front face of the printed circuit board and having a spindle (38) extending away from the front face; one or more light bulbs (44) mounted on the front face of the printed circuit board; a substantially planar light guide (28) lying substantially parallel with, and spaced from, the printed circuit board, the light guide having a rear face (30) directed towards the front face of the printed circuit board and a front face directed away the front face of the printed circuit board, the light guide diffusing light from the or each light bulb by way of its rear face; a coverlay (34) secured to the front face of the light guide having gauge graphics and a substantially transparent display area formed thereon, the light guide and the coverlay having aligned apertures (40) through which the spindle of the stepper motor extends; and a pointer (42) of opaque material mounted on the spindle adjacent the coverlay.

2. An instrument display as claimed in Claim 1, wherein the front face (20) of the printed circuit board (18) and the stepper motor (24) is of a light colour.

3. An instrument display as claimed in Claim 1 or Claim 2, wherein the printed circuit board (18) is cut from a sheet of plastics material.

4. An instrument display as claimed in any one of Claims 1 to 3, further comprising an odometer (16), wherein the odometer is in the form of a liquid crystal display which is secured to the front face (20) of the printed circuit board (18).

5. An instrument display as claimed in any one of Claims 1 to 5, wherein the majority of the electrical components (48) for controlling the operation of the stepper motor (24) and the or each light bulb (44) are mounted on the rear face (22) of the printed circuit board (18).
